Europäisches Patentamt

(19) European Patent Office

Office européen des brevets

(11) EP 0 629 430 B1

## (12) EUROPEAN PATENT SPECIFICATION

(45) Date of publication and mention
of the grant of the patent:
**23.10.1996 Bulletin 1996/43**

(51) Int. Cl.$^6$: **B01D 53/34**, B01D 53/50

(21) Application number: **94114153.3**

(22) Date of filing: **27.11.1991**

(54) **Method for desulfurizing exhaust gas**

Verfahren zum Entschwefeln von Abgas

Méthode pour la désulfurisation de gaz d'échappement

(84) Designated Contracting States:
**AT DE**

(30) Priority: **13.08.1991 JP 202767/91**

(43) Date of publication of application:
**21.12.1994 Bulletin 1994/51**

(62) Application number of the earlier application in
accordance with Art. 76 EPC: **91120292.7**

(73) Proprietor: **MITSUBISHI JUKOGYO KABUSHIKı
KAISHA
Tokyo (JP)**

(72) Inventors:
- **Ichinose, Toshimitsu,
c/o Nagasaki Techn. Inst.
Nagasaki-shi, Nagasaki-ken (JP)**
- **Tokuda, Kimishiro,
c/o Nagasaki Techn. Inst.
Nagasaki-shi, Nagasaki-ken (JP)**
- **Fujioka, Yuichi,
c/o Nagasaki Techn. Inst.
Nagasaki-shi, Nagasaki-ken (JP)**

(74) Representative: **Henkel, Feiler, Hänzel & Partner
Möhlstrasse 37
81675 München (DE)**

(56) References cited:
**EP-A- 0 301 272          WO-A-91/02583
DE-A- 3 308 927**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

## Description

BACKGROUND OF THE INVENTION:

Field of the Invention:

The present invention relates to a desulfurizing method for exhaust gas of boilers for use in electric power generation plant or in industry plant.

Description of the Prior Art:

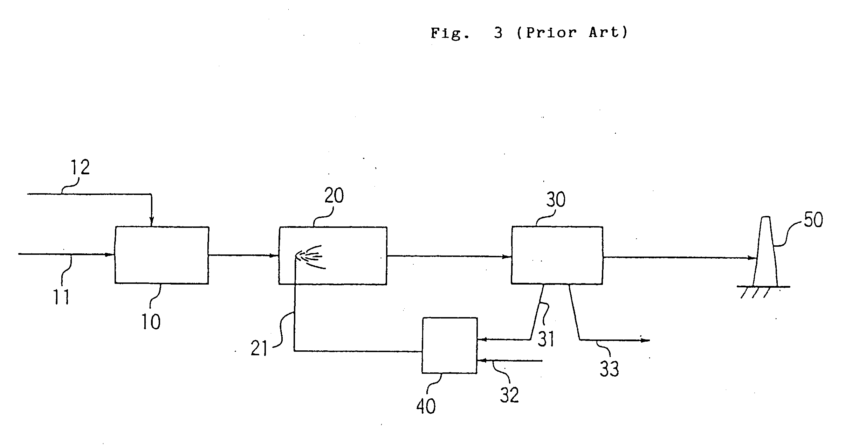

A desulfurizing method and a desulfurizing apparatus for combustion exhaust gas of a combustion furnace in a boiler or the like in the prior art, is shown in Fig. 3.

In this figure, pulverized coal 11 and pulverized limestone ($CaCO_3$) 12 are fed to a combustion furnace 10, and desulfurization within furnace is carried out. $SO_x$ component in the combustion gas exhausted from the combustion furnace 10 is further desulfurized in a desulfurizing flue 20 in which slurry 21 is sprayed. This slurry 21 is produced by mixing a part 31 of fly ash collected from the combustion gas exhausted from the desulfurizing flue 20 by means of an electrostatic precipitator (hereinafter called EP) 30 with water 32 in a mixing machine 40.

In the slurry 21 produced by mixing the fly ash collected by means of the EP 30 with water is contained $Ca(OH)_2$ produced from the limestone fed into the combustion furnace 10, and through the following reaction, desulfurization of combustion gas in the desulfurizing flue 20 is effected by the slurry 21:

$$Ca(OH)_2 + SO_2 + 1/2 \ O_2 \rightarrow CaSO_4 + H_2O$$

In these desulfurizing method and desulfurizing apparatus in the prior art, in order to operate EP 30 stably, gas temperatures at an inlet and an outlet of the desulfurizing flue 20 are set at temperatures sufficiently higher than a saturation temperature.

The remainder 33 of the fly ash collected in the EP 30 is subjected to predetermined treatment as EP ash. Also, the gas having dust such as the fly ash and the like removed in the EP 30 is released to the atmosphere through a stack 50.

The furnace desulfurization by means of limestone 12 in the above-described combustion furnace 10 is carried out as represented by the following formulae:

$$CaCO_3 \rightarrow CaO + CO_2$$

$$CaO + SO_2 + 1/2 \ O_2 \rightarrow CaSO_4$$

In addition, the desulfurization by means of slurry in the above-mentioned desulfurizing flue 20 is carried out as represented by the following formulae:

$$CaO + H_2O \rightarrow Ca(OH)_2$$

$$Ca(OH)_2 + SO_2 + 1/2 \ O_2 \rightarrow CaSO_4 + H_2O$$

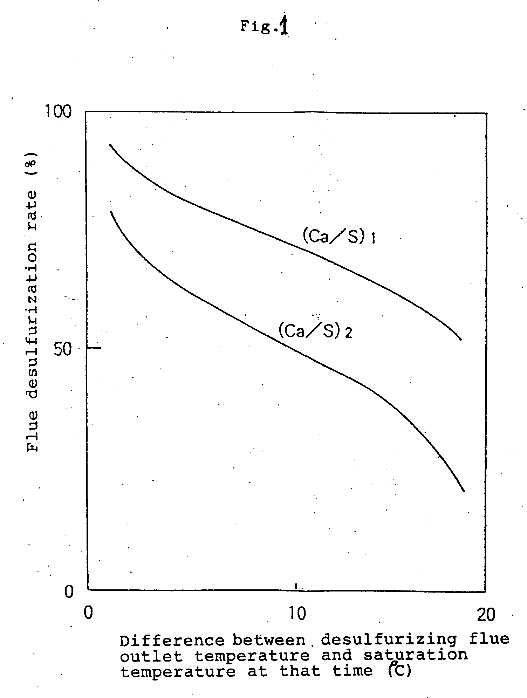

However, in the above-described desulfurizing method and apparatus in the prior art, a desulfurization rate in the desulfurizing flue 20 is poor. Desulfurization here is the more effective, the lower a gas temperature is as shown in Fig. 1.

It is to be noted that in Fig. 1, curve $(Ca/S)_1$ shows the case where unreacted CaO is present in a large amount as compared to the case represented by curve $(Ca/S)_2$.

However, taking into consideration a stable operation in the EP 30 in the next step of the process, the gas temperature cannot be largely lowered in order to avoid inconveniences such as a sticky condition caused by moisture, and hence, a desulfurization rate in the desulfurizing flue 20 could not be raised.

In addition, in the desulfurizing flue 20, unreacted quick lime (CaO) after desulfurization has been once carried out within the combustion furnace, is utilized, this is converted into slurry and desulfurization through a gas/liquid reaction is effected, but since the quick lime converted into slurry has a very poor reactivity of desulfurization as CaO because it takes the state where pure CaO is surrounded by $CaSO_4$ of the reaction product.

At the time of the above-described desulfurization in the prior art, while desulfurization based on the reaction of:

$$SO_2 + Ca(OH)_2 + 1/2 \ O_2 \rightarrow CaSO_4 + H_2O$$

is effected in the desulfurizing flue 20 as described above when a temperature is sufficiently high, at a temperature of about 60°C - 80°C calcium sulfite ($CaSO_3$) is produced through the following reaction:

$$SO_2 + Ca(OH)_2 \rightarrow CaSO_3 + H_2O$$

Though this $CaSO_3$ is collected in the EP 30, it has the following characteristics:

(a) This $CaSO_3$ (solid) having once finished reaction, is stable and cannot be simply oxidized into $CaSO_4$ (gypsum, publicly harmless product).

(b) $CaSO_3$ is substance concerned in COD (Chemical Oxygen Demand) public pollution, and so it cannot be subjected to a simple disposal treatment.

Accordingly, the ashes 31 and 33 collected in the EP 30 would contain $CaSO_3$ of the public pollution component.

SUMMARY OF THE INVENTION:

It is therefore one object of the present invention to provide a method for desulfurizing exhaust gas which can resolve the above-mentioned problems in the prior art.

According to the present invention, there is provided a method for desulfurizing exhaust gas according to claim 1.

In the method according to the present invention, as a result of the fact that the fly ash after desulfurization in the desulfurizing flue is not abandoned in itself but it is again charged into a high-temperature region of the combustion furnace, the following reaction is generated.

$$CaSO_3 + 1/2\ O_2 \rightarrow CaSO_4$$

$CaSO_4$ is gypsum which is publicly harmless substance, and so, it can be subjected to the ash (fly ash) treatment in the prior art.

Also, an ash collecting device is disposed at the outlet of the combustion furnace and at the upper stream of the desulfurizing flue, and ash under the condition that $CaSO_3$ is not present in the ash, is disposed for abandonment. More specifically, since the outer surfaces of the ash collected by the ash collecting device mostly consist of $CaSO_4$ due to chemical reaction, the finely pulverized ash is selected through a grain size selection method or a specific gravity selection method, and $CaSO_4$ in the outer surface portion is abandoned to the outside of the system, while the ash of the unreacted portion containing CaO is reused as a desulfurizing agent in the desulfurizing flue.

The above-mentioned and other objects, features and advantages of the present invention will become more apparent by reference to the following description of preferred embodiments of the invention taken in conjunction with the accompanying drawings.

BRIEF DESCRIPTION OF THE DRAWINGS:

In the accompanying drawings:

Fig. 1 is a diagram showing relations between a combustion gas temperature and a flue desulfurization efficiency in a desulfurizing flue;
Fig. 2 is a system diagram of a preferred embodiment of the present invention;
Fig. 3 is a system diagram showing a desulfurizing method and a desulfurizing apparatus for exhaust gas in the prior art.

DESCRIPTION OF THE PREFERRED EMBODIMENTS:

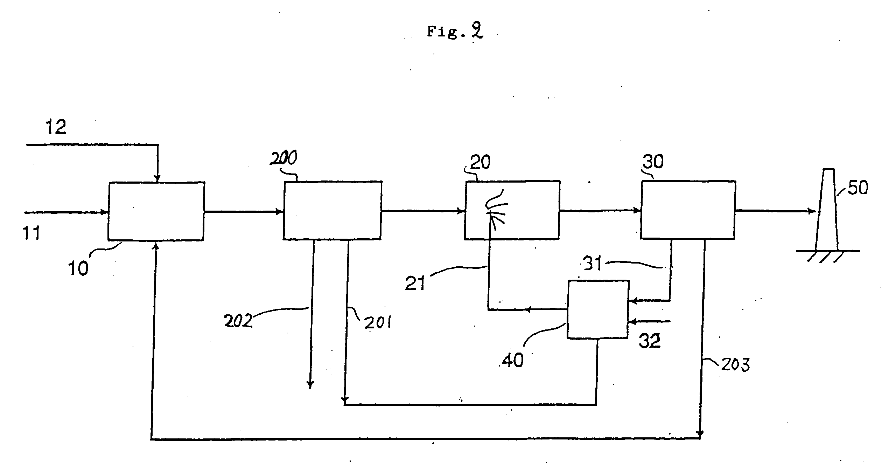

In Fig. 2, between a combustion furnace 10 and a desulfurizing flue 20 in the heretofore known apparatus in Fig. 3 is additionally provided an upstream side EP 200. In addition, a part 203 of ash collected in an EP 30 on the outlet side of the desulfurizing flue 20 is not subjected to abandonment disposition, but it is again charged into a high-temperature section of the combustion furnace 10.

A part (the part containing CaO serving as an effective component) 201 of ash collected in the upstream side EP 200 is led to a mixer 40 for the purpose of carrying out mixing with water 32 to produce a desulfurizing agent in the desulfurizing flue 20. Also, the other part (the part of $CaSO_4$ which is a publicly harmless component) 202 of the ash collected in the upstream side EP 200 is subjected to abandonment disposition. The part 201 containing CaO serving as an effective component and the part 202 consisting of $CaSO_4$ which is a publicly harmless component can be separated by finely pulverizing the collected ash. It is to be noted that the ash collected in the EP 30 could be wholly charged into the combustion furnace 10, and in the case where it is partly charged into the combustion furnace 10, it is possible to feed the residual collected ash 31 to the mixer 40 to be used as a raw material of a flue desulfurizing agent.

Generally when limestone was not charged into the combustion furnace 10 which used dust coal (Daido coal containing sulfur of 0.7% in total), in which a flame temperature was 1500 - 1600°C and a temperature at an outlet of the furnace was 1000 - 1200°C, $SO_2$ concentration in the exhaust gas at the outlet of the furnace was 450 ppm, but an $SO_2$ concentration in the exhaust gas at the outlet of the combustion furnace 10 when desulfurization was carried out by charging limestone was 270 ppm. The inlet temperature when this exhaust gas having an $SO_2$ concentration of 270 ppm enters the desulfurizing flue 20 was 81°C, the outlet temperature became 68°C, and the $SO_2$ concentration of the exhaust gas at the outlet of the desulfurizing flue 20 became 81 ppm.

While explanation was made above by exemplifying the EP as a collecting device for fly ash, it is a matter of course that a cyclone, a bag filter or the like can be also employed.

In the desulfurizing method for exhaust gas according to the present invention, calcium sulfite ($CaSO_3$) acting as publicly harmful substance would not be produced, only an amount less than a limited value thereof is exhausted to the outside of the system, hence treatment for preventing public pollution in the subsequent step of the process is unnecessary, and so, a cost can be reduced.

**Claims**

1. A method for desulfurizing exhaust gas, wherein desulfurization within a combustion furnace (10) by means of added limestone is followed by desulfurization of the exhaust gases within an exhaust gas flue serving as a desulfurizing flue, the fly ash produced after desulfurization within the exhaust gas flue is collected, characterized in that a part or whole of said collected fly ash is again charged into a high-temperature section within the combustion furnace (10), further collection of the fly ash is carried out at the outlet of the combustion furnace and at the upper stream of the desulfurizing flue, an effective component part, containing CaO, of said further collected fly ash is used after being mixed with water as a desulfurizing agent within the desulfurizing flue (20), and the remainder publicly harmless component part comprising $CaSO_4$ is abandoned to the outside of the system.

## Patentansprüche

1. Verfahren zum Entschwefeln von Abgas, wobei der Entschwefelung in einem Verbrennungsofen (10) mit Hilfe von zugesetztem Kalkstein eine Entschwefelung der Abgase in einem als Entschwefelungskamin dienenden Abgaskamin nachgeschaltet ist und die nach der Entschwefelung in dem Abgaskamin angefallene Flugasche gesammelt wird, dadurch gekennzeichnet, daß ein Teil der oder die gesamte Flugasche erneut in einen Hochtemperaturbereich in dem Verbrennungsofen (10) eingetragen wird, weiterhin ein Sammeln der Flugasche an der Austrittsöffnung des Verbrennungsofens und am oberen Strom des Entschwefelungskamins erfolgt, ein CaO-haltiger, die wirksame Komponente darstellender Teil der weiterhin gesammelten Flugasche nach dem Vermischen mit Wasser als Entschwefelungsmittel in dem Entschwefelungskamin (20) verwendet wird und der restliche und für die Öffentlichkeit unschädliche, $CaSO_4$-haltige Komponententeil aus dem System ausgetragen wird.

## Revendications

1. Procédé pour désulfurer des gaz d'échappement, dans lequel la désulfuration dans un four de combustion (10) au moyen de calcaire ajouté est suivie par la désulfuration des gaz d'échappement dans une conduite de gaz d'échappement servant de conduite de désulfuration et les cendres volantes produites après la désulfuration dans la conduite des gaz d'échappement sont recueillies, caractérisé en ce qu'une partie ou la totalité des cendres volantes est introduite à nouveau dans une section à haute température du four de combustion (10), que les cendres volantes sont en outre recueillies à la sortie du four de combustion et à la partie supérieure de la conduite de désulfuration, qu'une partie significative desdites cendres volantes recueillies contenant du CaO est utilisée après mélange avec de l'eau comme agent de désulfuration dans la conduite de désulfuration (20), le restant des cendres volantes, qui contiennent du $CaSO_4$ et qui sont inoffensives, étant évacué hors du système.

Fig.1

Difference between desulfurizing flue
outlet temperature and saturation
temperature at that time (°C)

Fig. 2

Fig. 3 (Prior Art)

EP 0 629 430 B1